# EUROPEAN PATENT SPECIFICATION

(11) **EP 2 937 576 B1**
(45) Date of publication and mention of the grant of the patent: **02.05.2018**
(21) Application number: 13866033.7
(22) Date of filing: 17.12.2013
(51) Int. Cl.: F16B 5/02, B29C 65/56, B29C 65/00

(54) **FASTENING SECTION STRUCTURE**
STRUKTUR EINES BEFESTIGUNGSABSCHNITTES
STRUCTURE DE SECTION DE FIXATION

(30) Priority: 18.12.2012 JP 2012275708
(43) Date of publication of application: 28.10.2015
(73) Proprietor: Toray Industries, Inc., Tokyo 103-8666 (JP)
(72) Inventor: INOUE Takuya, Otsu-shi Shiga 520-8558 (JP); YAMAGUCHI Koji, Tokyo 103-8666 (JP); MATSUOKA Hideo, Nagoya-shi Aichi 455-8502 (JP); NAKAGOE Hiroaki, Otsu-shi Shiga 520-8558 (JP)
(74) Representative: Hoefer & Partner Patentanwälte mbB
(86) International application number: PCT/JP2013/083721
(87) International publication number: WO 2014/098066

(56) References cited:
- JP-A- H0 860 861
- JP-A- 2002 330 520
- JP-A- 2002 330 520
- JP-A- 2008 167 535
- JP-A- 2008 167 535
- JP-U- H01 168 643
- US-A- 6 070 484

## Description

### Technical Field of the Invention

The present invention relates to a fastening section structure, and specifically, to a fastening section structure which can prevent an undesired fracture due to shear from a fastening section, etc., and can smoothly absorb an energy of an external load applied to the fastening section at a portion around the fastening section.

### Background Art of the Invention

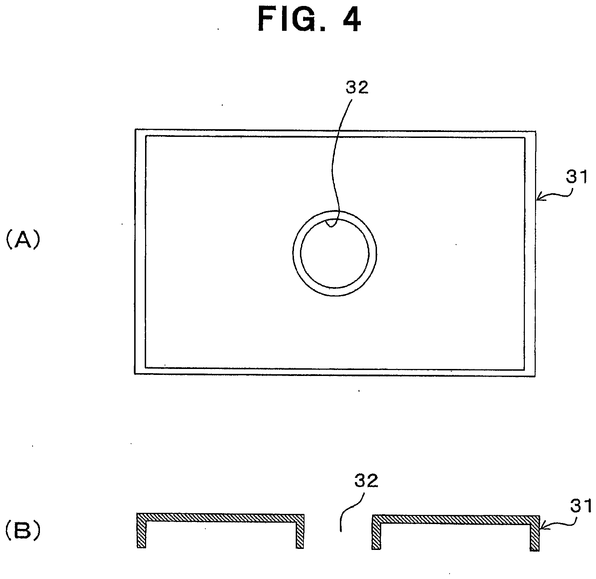

For example, as shown in Fig. 4, generally in a member 31 having a fastening section 32, the member 31 is fastened to another member using a fastening member such as a bolt at the fastening section 32, and if a great external load is applied to the member 31, there is a possibility that the member 31 is fractured from the fastening section 32 by shear and the like. In order to prevent such a fracture and reinforce the fastening section 32 or the portion therearound, there is a case where radially extending or concentric circle-shaped ribs are formed around the fastening section 32 (for example, Patent documents 1 and 2).

In Patent document 1, a structure is disclosed wherein a special device is not added to a fastening section itself except the above-described structure, and the strength of the member is weakened by a slit at a portion other than the fastening section. In Patent document 2, a structure is disclosed wherein an axial load from a fastening member is reduced by a load reducing material. In any of these structures, however, an effect is not present or an effect is poor in a point for preventing an undesired fracture due to shear from the fastening section, etc., and in a point for smoothly absorbing an energy of an external load applied to the fastening section at a position around the fastening section.

By the way, in a member comprising a material capable of causing progressive failure, for example, a resin or a fiber reinforced resin capable of causing progressive failure, as long as a fracture due to shear and the like does not occur in a fastening section, it is possible to smoothly absorb an energy of an external load applied to the fastening section by the progressive failure at a position around the fastening section. However, reinforcement of the fastening section for enhancing the strength and the rigidity thereof is frequently required, and in case of reinforcement carried out simply by only a rib and the like, because the strength and the rigidity of the portion reduce rapidly when the rib and the like is fractured, it is difficult to progress the progressive failure for a smooth energy absorption. In other words, it is difficult to achieve both a structure for smoothly progressing the progressive failure and a structure for enhancing the strength and rigidity of the fastening section.

### Prior art documents

### Patent documents

Patent document 1: JP-A-2008-278581
Patent document 2: JP-A-2012-200979

Document JP 2008 167535 A discloses an electrical connection box maintaining highly reliable sealing performance with a simple structure. A recessed portion is provided on the top surface of a bottom wall of a box main unit, having a component-accommodation chamber inside. A through-hole for fixing a bolt to a car body is formed at the bottom portion of this recessed portion. A flat sealing plane is formed on the top surface of the bottom wall of the box main unit so as to surround the opening of the recessed portion. A space between the component-accommodation chamber and the recessed portion is sealed by accommodating an electronic unit in the component-accommodation chamber of the box main unit and by closing the recessed portion by bringing the bottom surface of the electronic component contact with the sealing plane.

Document JP 2002 330520 A describes a junction box enabling the withdrawal of it efficiently. A mounting part is provided at a prescribed location. The mounting part is provided with a thin-walled part so as to surround an insertion hole. The box body is attached to a vehicle panel by inserting a bolt into the insertion hole. The box body is detached from the vehicle panel by the rupture of the thin-walled part.

### Summary of the Invention

### Problems to be solved by the Invention

Accordingly, an object of the present invention is to, by adding a special device particularly to a structure around a fastening section from the above-described viewpoint, provide a fastening section structure capable of preventing an undesired fracture due to shear from a fastening section, etc., and smoothly absorbing an energy of an external load applied to the fastening section at a portion around the fastening section.

### Means for solving the Problems

The object underlying the present invention is achieved by a fastening section structure according to independent claim 1. Preferred embodiments thereof are defined in the respective dependent claims.

To achieve the above-described object, a fastening section structure according to the present invention has a plurality of concentric circle-shaped rib walls around a fastening section of a member having the fastening section, and is characterized in that a bearing strength in at least a second-layer rib wall is set to be lower than a bearing strength in an innermost-layer rib wall closest to a fastening member. Here, the "bearing strength" is represented as a stress at the time when a displacement of a portion of an inner circumferential surface of a rib wall starts to increase even if a load acting on the inner circumferential surface does not increase.

In such a fastening section structure according to the present invention, since the bearing strength in at least the second-layer rib wall is lower than the bearing strength in the innermost-layer rib wall, when an external load is applied to the fastening section, the second-layer or an outer-layer rib wall is going to be broken more early than the innermost-layer rib wall, and the breaking is going to start from a site furthest away from the fastening section, Namely, a process for progressive failure is established around the fastening section, and the progressive failure is started from a site furthest away from the fastening section. Therefore, while the strength and rigidity of the fastening section can be stably maintained to be high by the reinforcement structure for the fastening section including the innermost-layer rib wall, an energy of an external load applied to the fastening section is going to be smoothly absorbed through the progressive failure by the start of the progressive failure from a site furthest away from the fastening section. Namely, it becomes possible to achieve both the reinforcement for enhancing the strength and rigidity of the fastening section and the smooth energy absorption of an external load as a result of the progressive failure.

In the above-described fastening section structure according to the present invention, although the material of the above-described member is not particularly restricted as long as the above-described progressive failure can be caused in the member, it is desired that the above-described member itself is composed of a material capable of causing progressive failure.

As such a member forming material capable of causing progressive failure, in particular, a material including a resin, especially including a thermoplastic resin, can be raised. As such a resin as a material capable of causing progressive failure, for example, can be exemplified polyesters such as polyethylene terephthalate (PET), polybutylene terephthalate (PBT), polyethylene naphthalate (PEN) and liquid crystal polyesters, polyolefines such as polyethylene (PE), polypropylene (PP) and polybutylene, styrene-based resins, and other than these resins, polyoxymethylene (POM), polyamide (PA), polycarbonate (PC), polymethylene methacrylate (PMMA), polyvinyl chloride (PVC), polyphenylene sulfide (PPS), polyphenylene ether (PPE), modified PPE, polyimide (PI), polyamideimide (PAI), polyetherimide (PEI), polysulfone (PSU), modified PSU, polyethersulfone (PES), polyketone (PK), polyetherketone (PEK), polyetheretherketone (PEEK), polyetherketoneketone (PEKK), polyarylate (PAR), polyether nitrile (PEN), phenolic-based resins, phenoxy resin, fluorine-based resins such as polytetrafluoroethylene, and further, polyester-based, polyamide-based, polybutadiene-based, polyisoprene-based and fluorine-based thermoplastic elastomers. Copolymers and modified polymers thereof, and a resin blended with two or more kinds thereof, may be employed. In particular, from the viewpoint of high elongation, PC resins, ABS resins and blended materials thereof are preferably used, and from the viewpoint of high strength, polyamide resins and blended materials thereof are preferably used.

As preferred polyamide resins used in the present invention, polymers or copolymers, whose main raw materials are amino acids, lactams, or diamine and dicarboxylic acid, are exemplified. As typical examples of such a material, can be exemplified an amino acid such as 6-aminocaproic acid, 11-amino undecanoic acid, 12-amino dodecanoic acid or para-amino methyl benzoic acid, a lactam such as ε-caprolactam or ω-laurolactam, an aliphatic diamine such as tetramethylene diamine, pentamethylene diamine, hexamethylene diamine, 2-methyl pentamethylene diamine, nonamethylene diamine, decamethylene diamine, undecamethylene diamine, dodecamethylene diamine, 2,2,4-/2,4,4-trimethyl hexamethylene diamine or 5-methyl nonamethylene diamine, an aromatic diamine such as meta-xylylene diamine or paraxylylene diamine, an alicyclic diamine such as 1,3-bis(aminomethyl) cyclohexane, 1,4-bis(aminomethyl) cyclohexane, 1-amino-3-amino methyl-3,5,5-trimethyl cyclohexane, bis(4-amino cyclohexyl) methane, bis(3-methyl-4-amino cyclohexyl) methane, 2,2-bis(4-amino cyclohexyl) propane, bis(aminopropyl) piperazine or aminoethyl piperazine, an aliphatic dicarboxylic acid such as adipic acid, suberic acid, azelaic acid, sebacic acid or dodecanedioic acid, an aromatic dicarboxylic acid such as terephthalic acid, isophthalic acid, 2-chloroterephthalic acid, 2-methyl terephthalic acid, 5-methyl isophthalic acid, 5-sodium sulfoisophthalic acid, 2,6-naphthalene dicarboxylic acid, hexahydroterephthalic acid or hexahydroisophthalic acid, an alicyclic dicarboxylic acid such as 1,4-cyclohexane dicarboxylic acid, 1,3-cyclohexane dicarboxylic acid, 1,2-cyclohexane dicarboxylic acid or 1,3-cyclopentane dicarboxylic acid, or the like. In the present invention, two or more kinds of polyamide homopolymers or copolymers derived from these raw materials may be compounded.

As concrete examples of polyamide, can be exemplified polycaproamide ("nylon" 6), polyhexamethylene adipamide ("nylon" 66), polytetramethylene adipamide ("nylon" 46), polytetramethylene sebacamide ("nylon" 410), polypentamethylene adipamide ("nylon" 56), polypentamethylene sebacamide ("nylon" 510), polyhexamethylene sebacamide ("nylon" 610), polyhexamethylene dodecanamide ("nylon" 612), polydecamethylene adipamide ("nylon" 106), polydecamethylene sebacamide ("nylon" 1010), polydecamethylene dodecanamide ("nylon" 1012), polyundecaneamide ("nylon" 11), polydodecaneamide ("nylon" 12), polycaproamide/polyhexamethylene adipamide copolymer ("nylon" 6/66), polycaproamide/polyhexamethylene terephthalamide copolymer ("nylon" 6/6T), polyhexamethylene adipamide/polyhexamethylene terephthalamide copolymer ("nylon" 66/6T), polyhexamethylene adipamide/polyhexamethylene isophthalamide copolymer ("nylon" 66/6I), polyhexamethylene terephthalamide/polyhexamethylene isophthalamide copolymer ("nylon" 6T/6I), polyhexamethylene terephthalamide/polydodecaneamide copolymer ("nylon" 6T/12), polyhexamethylene adipamide/polyhexamethylene terephthalamide/polyhexamethylene isophthalamide copolymer ("nylon" 66/6T/6I), polyxylylene adipamide ("nylon" XD6), polyxylylene sebacamide ("nylon" XD10), polyhexamethylene terephthalamide/polypentamethylene terephthalamide copolymer ("nylon" 6T/5T), polyhexamethylene terephthalamide/poly-2-methylpentamethylene terephthalamide copolymer ("nylon" 6T/M5T), polypentamethylene terephthalamide/polydecamethylene terephthalamide copolymer ("nylon" 5T/10T), polynonamethylene terephthalamide copolymer ("nylon" 9T), polynonamethylene terephthalamide/poly-2-methyloctamethylene terephthalamide copolymer ("nylon" 9T/M8T), polydecamethylene terephthalamide ("nylon" 10T), polydecamethylene terephthalamide/polyhexamethylene adipamide copolymer ("nylon" 10T/66), polydecamethylene terephthalamide/polyhexamethylene dodecanamide copolymer ("nylon" 10T/612), polydodecamethylene terephthalamide ("nylon" 12T), and copolymers thereof. Here, "/" indicates a copolymer, and hereinafter, same.

In particular, a polyamide having a melting point in a range of 220°C to 330 °C. By using a polyamide having a melting point of 220°C or higher, a thermal resistance (load-deflection temperature) can be more enhanced. On the other hand, by using a polyamide having a melting point of 330°C or lower, decomposition of the polyamide can be suppressed when a resin composition is produced, and the thermal resistance, rigidity at high temperature, mechanical strength and impact resistance of a molded article obtained from the resin composition can be more improved. Here, the melting point of a polyamide in the present invention is defined as a temperature of an endothermic peak determined using a differential scanning calorimeter that is exhibited when the polyamide is reduced in temperature down to 30 °C at a temperature reduction speed of 20°C/min. from its molten state under a condition of an inert gas atmosphere, and thereafter, it is elevated in temperature up to a melting point plus 40°C at a temperature elevation speed of 20°C/min. However, in case where two or more endothermic peaks are detected, the melting point is defined as a temperature of an endothermic peak having the largest peak intensity.

In the present invention, it is preferred that the glass transition temperature of a polyamide is in a range of 30°C to 150°C. If the glass transition temperature is 30 °C or higher, the rigidity at high temperature, mechanical strength and impact resistance of a molded article can be more improved. It is more preferably 45°C or higher. On the other hand, if the glass transition temperature is 150°C or lower, the crystallization speed at the time of molding can be appropriately suppressed, and a resin composition suitable to molding processing can be obtained. Here, the glass transition temperature of a polyamide in the present invention is defined as a temperature at a conjunctive point of a step-like endothermic peak determined using a differential scanning calorimeter that is exhibited when the polyamide is rapidly cooled by liquid nitrogen under a condition of an inert gas atmosphere, and thereafter, it is elevated in temperature at a temperature elevation speed of 20°C/min.

As a polyamide having a melting point in a range of 220°C to 330°C and having a glass transition temperature in a range of 30°C to 150°C, for example, "nylon" 6, "nylon" 610, "nylon" 66, "nylon" 46, "nylon" 410, "nylon" 56, copolymers having a hexamethylene terephthalamide unit such as "nylon" 6T/66 copolymer, "nylon" 6T/6I copolymer, "nylon" 6T/12 copolymer, "nylon" 6T/5T copolymer, "nylon" 6T/M5T copolymer or "nylon" 6T/6 copolymer, "nylon" 9T, "nylon" 9T/M8T, "nylon" 10T, "nylon" 10T/612, "nylon" 10T/66, "nylon" 12T, and the like, can be exemplified. It is also suitable in practical use to compound two or more kinds of these polyamides as needed.

Although the polymerization degree of a polyamide is not particularly restricted, it is preferred that a relative viscosity determined in 98% concentrated sulfuric acid having a resin concentration of 0.01 g/ml is in a range of 1.5 to 5.0. If the relative viscosity is 1.5 or higher, the mechanical strength, impact resistance, thermal resistance and rigidity at high temperature of a molded article to be obtained can be more improved. The relative viscosity is more preferably 2.0 or higher. On the other hand, if the relative viscosity is 5.0 or lower, the molding processing property is excellent because of its excellent flowability.

As the method for producing a polyamide used in the present invention, for example, in case of a polyamide whose main raw materials are diamine and dicarboxylic acid, a method, wherein diamine and dicarboxylic acid or a salt thereof, which become raw materials, are heated to obtain a low-degree condensate, and further, by solid-phase polymerization and/or melt polymerization, a high-degree polymerization is achieved, or the like, can be employed. Any of a two-stage polymerization in which the low-degree condensate is once taken out and the solid-phase polymerization and/or melt polymerization is carried out, and a single-stage polymerization in which the solid-phase polymerization and/or melt polymerization is carried out in an identical reactor, may be used. Where, the "solid-phase polymerization" means a process for carrying out heating at a temperature in a range of not lower than 100°C and not higher than the melting point under a pressure-reduced condition or in an inert gas, and the "melt polymerization" means a process for carrying out heating up to a temperature of the melting point or higher under an atmospheric-pressure condition or a pressure-reduced condition.

Further, in the fastening section structure according to the present invention, a structure can be employed wherein the member has the concentric circle-shaped rib walls around the fastening section at a form of three or more layers, and a strength in a radial direction in a portion between the innermost-layer rib wall and the second-layer rib wall is greater than a strength in a radial direction in a portion between the second-layer rib wall and a third-layer rib wall. Namely, it is a structure wherein the strength of a portion between the second-layer rib wall and the third-layer rib wall is intentionally weakened. In such a structure, in the step of progressive failure, because the portion between the second-layer rib wall and the third-layer rib wall can be broken prior to the portion between the innermost-layer rib wall and the second-layer rib wall, it becomes possible to bring the rib walls into contact with each other in the outer portion having a larger area among the portions disposed in a concentric circle form. When the condition is formed wherein the rib walls come into contact with each other, it becomes possible to receive a great load, the propagation of fracture to a side outer than that can be effectively prevented, and it can be effectively prevented that the whole of the member reaches to be fractured.

Further, in the fastening section structure according to the present invention, in particular, it is preferred that radially extending ribs are provided between the above-described concentric circle-shaped rib walls. Since the radially extending ribs can efficiently receive a load in the radial direction, by providing the radially extending ribs, the strength and rigidity of the fastening section can be greatly enhanced. Namely, while enhancing the strength and rigidity of the fastening section, smooth energy absorption of an external load becomes possible through the progressive failure caused around the fastening section.

Further, in the fastening section structure according to the present invention, a structure can be employed in the fastening section wherein a collar is fitted around the above-described fastening member. Since by fastening via the collar it is avoided that a screw part or the like of the fastening member comes into contact directly with an inner surface of a hole of a member, and further, it becomes possible to uniformly disperse a load when an external load is transmitted, it can be prevented that an excessively great local load is applied to a small portion, and through such a state, more smooth energy absorption becomes possible.

Further, although the kind of the above-described fastening member is not particularly restricted, typically a bolt can be used.

### Effect according to the Invention

Thus, in the fastening section structure according to the present invention, since a specific relationship is given between the bearing strengths of the concentric circle-shaped rib walls, the strength and rigidity of the fastening section are enhanced and it is enabled to start progressive failure from a site furthest away from the fastening section, both reinforcement of the fastening section and smooth energy absorption of an external load due to the progressive failure can be achieved.

### Brief explanation of the drawings

[Fig. 1] Fig. 1 shows a fastening section structure according to an embodiment for explaning the background of the present invention, Fig. 1 (A) is a schematic plan view and Fig. 1 (B) is a schematic sectional view.
[Fig. 2] Fig. 2 is a schematic perspective view of a fastening section structure according to another embodiment of the present invention.
[Fig. 3] Fig. 3 is an enlarged schematic plan view of the fastening section structure depicted in Fig. 2.
[Fig. 4] Fig. 4 shows a conventional general fastening section structure, Fig. 4 (A) is a schematic plan view and Fig. 4 (B) is a schematic sectional view.

### Embodiments for carrying out the Invention

Hereinafter, embodiments of the present invention will be explained referring to figures.

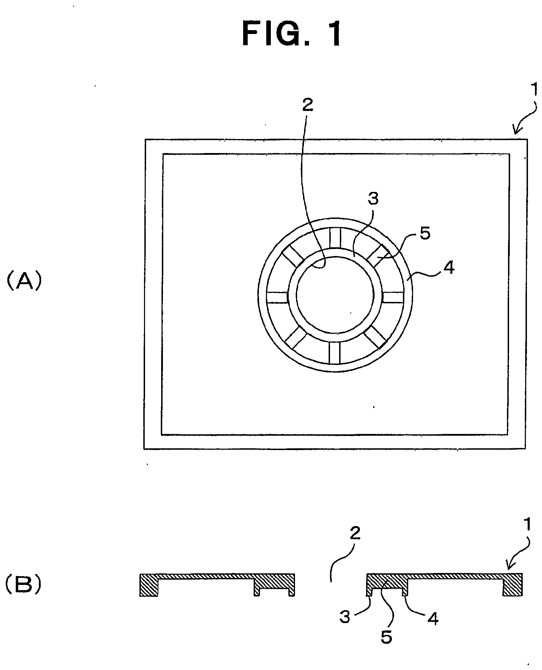

Fig. 1 shows a fastening section structure according to an embodiment for explaning the background of the present invention. In Fig. 1, symbol 1 indicates a member having a fastening section 2 and composed of a material capable of causing progressive failure, and a plurality of concentric circle-shaped rib walls 3, 4 are provided around the fastening section 2 of the member 1. Although two rib walls 3, 4 are provided in this embodiment, three or more concentric circle-shaped rib walls may be provided. Further, in this embodiment, between rib walls 3, 4, a plurality of ribs 5, which radially extend between rib walls 3, 4, are provided. In such a fastening section structure, a bearing strength in at least the second-layer rib wall 4 is set to be lower than a bearing strength in the innermost-layer rib wall 3 closest to a fastening member (not shown in the figure) which is inserted into a hole of the fastening section 2 for fastening.

In the fastening section structure according to such an embodiment, since the bearing strength in at least the second-layer rib wall 4 is set to be lower than the bearing strength in the innermost-layer rib wall 3, when an external load is applied to the fastening section 2, a portion of the second-layer rib wall 4, which is a site further away from the fastening section 2, is going to start to be broken more early, and a process for progressive failure from the outer layer side is established. As a result, while the strength and rigidity of the fastening section 2 can be enhanced by the reinforcement structure including the innermost-layer rib wall 3, by start of the progressive failure from a site further away from the fastening section 2, an energy of an external load applied to the fastening section 2 is going to be smoothly absorbed through the progressive failure, and both the reinforcement of the fastening section 2 and the smooth energy absorption of an external load as a result of the progressive failure can be realized.

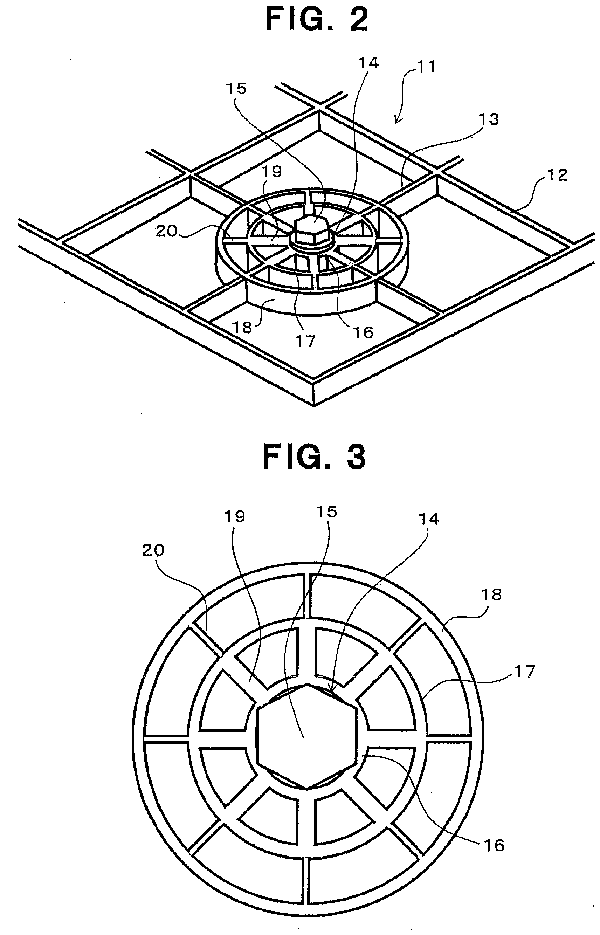

Figs. 2 and 3 show a fastening section structure according to an embodiment of the present invention. In the figures, symbol 11 indicates a member having a fastening section and composed of a material capable of causing progressive failure, and in this embodiment, reinforcing ribs 12, 13 extending perpendicularly to each other are disposed on the member 11. A fastening section 14 is provided on this member 11, and a bolt 15 as a fastening member is used for the fastening section 14. Around the fastening section 14 of the member 11, a plurality of (in this embodiment, three layers) rib walls 16, 17, 18 are provided concentrically. In this fastening section structure, concentric circle-shaped rib walls 16, 17, 18 may be provided. Further, in this embodiment, a bearing strength in at least the second-layer rib wall 17 is set to be lower than a bearing strength in the innermost-layer rib wall 16 closest to the bolt 15 inserted into a hole of the fastening section 14 for fastening. Furthermore, it is preferred that a bearing strength in the third-layer rib wall 18 is set to be lower than the bearing strength in the second-layer rib wall 17. Then, in this embodiment, although a plurality of radially extending ribs 19, 20 are provided between the rib walls 16 and 17 and between the rib walls 17 and 18, respectively, by providing a difference in thickness between the rib 19 and the rib 20, a structure can be achieved wherein the strength in a radial direction in a portion between the innermost-layer rib wall 16 and the second-layer rib wall 17 is greater than the strength in a radial direction in a portion between the second-layer rib wall 17 and the third-layer rib wall 18 (in other words, the strength in a radial direction in a portion between the second-layer rib wall 17 and the third-layer rib wall 18 is weakened to be smaller than the strength in a radial direction in a portion between the innermost-layer rib wall 16 and the second-layer rib wall 17).

In the fastening section structure according to such an embodiment, since in the step of progressive failure as aforementioned, a condition can be made where a portion between the second-layer rib wall 17 and the third-layer rib wall 18 is going to be broken prior to a portion between the innermost-layer rib wall 16 and the second-layer rib wall 17, it becomes possible to bring the rib walls 17, 18 into contact with each other in an outer portion having a larger area more early among the concentrically disposed portions. When the rib walls 17, 18 come into contact with each other, because it becomes possible to receive a great load at this portion, propagation of fracture to a side outer than this portion can be effectively prevented, and it can be effectively prevented to cause the whole of the member to be fractured. Similarly to in the aforementioned embodiment, achievement of both the reinforcement of the fastening section 14 and the smooth energy absorption of an external load due to the progressive failure can be realized similarly to in the aforementioned embodiment.

As described above, in order to realize the structure wherein the strength in a radial direction in a portion between the innermost-layer rib wall 16 and the second-layer rib wall 17 is greater than the strength in a radial direction in a portion between the second-layer rib wall 17 and the third-layer rib wall 18, it is also possible to employ the following embodiments.
(1) By changing the intervals of the concentric circle-shaped rib walls, concretely, by setting the distance between the innermost-layer rib wall and the second-layer rib wall smaller than that between the second-layer rib wall and the third-layer rib wall, the portion between the second-layer rib wall and the third-layer rib wall causes buckling more easily, and a similar effect can be obtained,
(2) Further, similarly to in the above-described (1), with respect to the radially extending ribs, the number of the radially extending ribs between the concentric circle-shaped rib walls of the innermost-layer rib wall and the second-layer rib wall is set to be greater than the number of the radially extending ribs between the second-layer rib wall and the third-layer rib wall. Also in such a structure, the radially extending ribs between the second-layer rib wall and the third-layer rib wall cause buckling more easily, and a similar effect can be obtained.
(3) Furthermore, with respect to the concentric circle-shaped rib walls and the radially extending ribs, the rib height is set higher as is closer to the innermost layer. Also in such a structure, a portion located at a more outer-layer side can be weakened in strength in a radial direction, and a similar effect can be obtained.

Where, the above-described embodiments (1) to (3) and the embodiment shown in Figs. 2 and 3 can be employed solely, respectively, or with arbitrary combination thereof.

### Industrial Applicability

The fastening section structure according to the present invention can be applied to a fastening section in any field required with both reinforcement of the fastening section and smooth energy absorption of an external load due to progressive failure.

### Explanation of symbols

1, 11: member
2, 14: fastening section
3, 4, 16, 17, 18: concentric circle-shaped rib wall
5, 19, 20: radially extending rib
15: bolt as fastening member

## Claims

1. A fastening section structure of a member (1, 11) and having a plurality of concentric circle-shaped rib walls (3, 4; 16, 17, 18) around a fastening section (2, 14) of said member (1, 11), said member (1, 11) having said fastening section (2, 14), wherein a bearing strength in at least a second-layer rib wall (4, 17) is set to be lower than a bearing strength in an innermost-layer rib wall (3, 16) closest to a fastening member (15),
**characterized in**
**that** said member (1, 11) has said concentric circle-shaped rib walls (3, 4; 16, 17, 18) around said fastening section (2, 14) at a form of three or more layers, and a strength in a radial direction in a portion between said innermost-layer rib wall (3, 16) and said second-layer rib (4, 17) wall is greater than a strength in a radial direction in a portion between said second-layer rib wall (4, 17) and a third-layer rib wall (18).

2. The fastening section structure according to claim 1, wherein said member (1, 11) is composed of a material capable of causing progressive failure.

3. The fastening section structure according to claim 1 or 2, wherein said member (1, 11) is formed from a material comprising a resin.

4. The fastening section structure according to any of claims 1 to 3, wherein said member (1, 11) is formed from a material comprising a thermoplastic resin.

5. The fastening section structure according to any of claims 1 to 4, wherein radially extending ribs (5, 19, 20) are provided between said concentric circle-shaped rib walls (3, 4; 16, 17, 18).

6. The fastening section structure according to any of claims 1 to 5, wherein a collar is fitted around said fastening member (15) in said fastening section (2, 14).

7. The fastening section structure according to any of claims 1 to 6, wherein said fastening member (15) comprises a bolt.

## Patentansprüche

1. Befestigungsabschnittstruktur eines Elements (1, 11) und mit einer Mehrzahl von konzentrisch-kreisförmigen Rippenwänden (3, 4; 16, 17, 18) um einen Befestigungsabschnitt (2, 14) des Elements (1, 11), wobei das Element (1, 11) den Befestigungsabschnitt (2, 14) aufweist, wobei eine Tragfähigkeit in mindestens einer Rippenwand (4, 17) einer zweiten Schicht derart ausgelegt ist, dass sie niedriger als eine Tragfähigkeit einer Rippenwand (3, 16) einer innersten Schicht ist, die einem Befestigungselement (15) am nächsten liegt,
**dadurch gekennzeichnet, dass**
das Element (1, 11) die konzentrisch-kreisförmigen Rippenwände (3, 4; 16, 17, 18) um den Befestigungsabschnitt (2, 14) herum in einer Form von drei oder mehr Schichten aufweist, und eine Stärke in eine radiale Richtung in einem Abschnitt zwischen der Rippenwand (3, 16) mit der innersten Schicht und der Rippenwand (4, 17) mit der zweiten Schicht größer ist als eine Stärke in einer radialen Richtung in einem Abschnitt zwischen der Rippenwand (4, 17) der zweiten Schicht und einer Rippenwand (18) der dritten Schicht.

2. Befestigungsabschnittstruktur nach Anspruch 1, wobei das Element (1, 11) aus einem Material aufgebaut ist, das einen fortschreitenden Ausfall verursachen kann.

3. Befestigungsabschnittsstruktur nach Anspruch 1 oder 2, wobei das Element (1, 11) aus einem Material gebildet ist, das ein Harz umfasst.

4. Befestigungsabschnittsstruktur nach einem der Ansprüche 1 bis 3, wobei das Element (1, 11) aus einem Material gebildet ist, das ein thermoplastisches Harz umfasst.

5. Befestigungsabschnittsstruktur nach einem der Ansprüche 1 bis 4, wobei zwischen den konzentrisch-kreisförmigen Rippenwänden (3, 4; 16, 17, 18) radial verlaufende Rippen (5, 19, 20) vorgesehen sind.

6. Befestigungsabschnittsstruktur nach einem der Ansprüche 1 bis 5, wobei ein Kragen um das Befestigungselement (15) in dem Befestigungsabschnitt (2, 14) angebracht ist.

7. Befestigungsabschnittsstruktur nach einem der Ansprüche 1 bis 6, wobei das Befestigungselement (15) einen Bolzen umfasst.

## Revendications

1. Structure de section de fixation d'un élément (1, 11) et ayant une pluralité de parois nervurées en forme de cercles concentriques (3, 4 ; 16, 17, 18) autour d'une section de fixation (2, 14) dudit élément (1, 11), ledit élément (1, 11) ayant ladite section de fixation (2, 14), où une résistance à la flexion dans au moins une paroi nervurée de deuxième couche (4, 17) est définie pour être inférieure à une résistance à la flexion dans une paroi nervurée d'une couche la plus interne (3, 16) la plus proche d'un élément de fixation (15),
**caractérisée en ce que**
ledit élément (1, 11) a lesdites parois nervurées en forme de cercles concentriques (3, 4 ; 16, 17, 18) autour de ladite section de fixation (2, 14) sous forme de trois couches ou plus, et une résistance dans une direction radiale dans une partie entre ladite paroi nervurée d'une couche la plus interne (3, 16) et ladite paroi nervurée de deuxième couche (4, 17) est supérieure à une résistance dans une direction radiale dans une partie entre ladite paroi nervurée de deuxième couche (4, 17) et une paroi nervurée de troisième couche (18).

2. Structure de section de fixation selon la revendication 1, dans laquelle ledit élément (1, 11) est composé d'un matériau capable de provoquer une rupture progressive.

3. Structure de section de fixation selon la revendication 1 ou 2, dans laquelle ledit élément (1, 11) est formé à partir d'un matériau comprenant une résine.

4. Structure de section de fixation selon l'une des revendications 1 à 3, dans laquelle ledit élément (1, 11) est formé à partir d'un matériau comprenant une résine thermoplastique.

5. Structure de section de fixation selon l'une des revendications 1 à 4, dans laquelle des nervures s'étendant radialement (5, 19, 20) sont prévues entre lesdites parois nervurées en forme de cercles concentriques (3, 4 ; 16, 17, 18).

6. Structure de section de fixation selon l'une des revendications 1 à 5, dans laquelle un collier est ajusté autour dudit élément de fixation (15) dans ladite section de fixation (2, 14).

7. Structure de section de fixation selon l'une des revendications 1 à 6, dans laquelle ledit élément de fixation (15) comprend un boulon.
